# EUROPÄISCHE PATENTANMELDUNG

(11) **EP 3 138 636 A1**
(43) Veröffentlichungstag der Anmeldung: **08.03.2017**
(21) Anmeldenummer: 15183600.4
(22) Anmeldetag: 03.09.2015
(51) Int. Cl.: B08B 7/00, A21B 3/16, A21B 5/02, B23K 26/067, B23K 26/10, B23K 26/16, B23K 26/082

(54) **ANORDNUNG ZUR REINIGUNG VON BACKOBERFLÄCHEN**

(71) Anmelder: Haas Food Equipment GmbH, 1210 Wien (AT)
(72) Erfinder: HAAS, Johannes, 1040 Wien (AT); HAAS, Josef, 2100 Leobendorf (AT); JIRASCHEK, Stefan, 2202 Königsbrunn (AT); KALLER, Martin, 2211 Pillichsdorf (AT); SACHSENHOFER, Johann, 1220 Wien (AT); HAIDENBAUER, Bernhard, 1220 Wien (AT)
(74) Vertreter: Puchberger & Partner Patentanwälte

(57) **Zusammenfassung**

Anordnung und Laseranordnung zum Reinigen von reliefartig ausgestalteten Backoberflächen (1) und gegebenenfalls zum Reinigen von Dampf- und/oder Dichtleisen (2) von Backplatten (3) einer Backmaschine (4), umfassend:
- eine Laserquelle (5) zur Ausgabe eines Laserstrahls (6) auf einen örtlich wählbaren Zielbereich (7) durch fortlaufende Änderung der Ausgaberichtung des Laserstrahls (6) und Abfahren einer den Zielbereich (7) bildenden Kontur (8),
- eine entfernt von der Laserquelle (5) und im Zielbereich (7) der Laserquelle (5) angeordnete Umlenkoptik (9) zur Umlenkung des Laserstrahls (6) und zur Projektion des durch die Kontur (8) gebildeten Zielbereichs (7) auf die zu reinigende Backplatte (3) entlang einer Projektionsrichtung (10),

dadurch gekennzeichnet, dass die Umlenkoptik (9) eine Verstellmöglichkeit zur Veränderung der Projektionsrichtung (10) und der Austrittsrichtung des Laserstrahls (6) aufweist.

## Beschreibung

Die Erfindung betrifft eine Anordnung zur Reinigung von Backoberflächen, insbesondere zur Reinigung der Oberflächen von Backplatten, Backformen oder Backringen, beispielsweise zur Herstellung von Flachwaffeln, Hohlwaffeln, gerollten Tüten, Weichwaffeln, Waffelröllchen, Hohlhippen etc. Ferner betrifft die Erfindung eine Anordnung einer Backmaschine zur Herstellung von Backprodukten, die eine oder mehrere Backoberfläche(n) und mit zumindest einer Anordnung zur Reinigung der Backoberfläche(n).

Backmaschinen, wie beispielsweise Waffelbackmaschinen zur industriellen Herstellung von Waffeln, umfassen einen Ofenabschnitt in dem öffen- und schließbare Backzangen umlaufend angetrieben geführt werden. Der zu backende Teig oder die zu backende Backmasse wird zwischen die beiden Backplatten der Backzangen eingebracht und unter Einwirkung von Temperatur und gegebenenfalls Druck gebacken. Nach dem Backvorgang werden die Backzangen geöffnet und die fertig gebackene Waffel kann entnommen werden.

In der Praxis tritt dabei das Problem auf, dass an den mit dem Teig oder der Backmasse in Berührung kommenden Backoberflächen der Backplatten Rückstände zurückbleiben. Diese Rückstände beinhalten beispielsweise Öle, Fette, stärkehaltige Ablagerungen, Zuckerablagerungen, etc. Um diese Ablagerungen von den Backoberflächen zu entfernen und diese zu reinigen, kommen derzeit unterschiedliche Verfahren zum Einsatz.

Beispielsweise werden Backzangen in einem Reinigungsmodus der Backmaschine einzeln geöffnet und durch händisches Bürsten ausgebürstet. Eine weitere dem Stand der Technik entsprechende Möglichkeit ist das Abblasen der Backoberflächen mit Druckluft, was aber nur lockeren Backabfall beseitigt und nicht Verkrustungen.

Bei der Reinigung der Backoberflächen entsteht dabei ein Zielkonflikt zwischen gründlicher Reinigung und schonender Behandlung der Backoberflächen. Beispielsweise kann es beim Ausbürsten der Backoberflächen vorkommen, dass die Oberfläche aufgeraut oder beschädigt wird. Andererseits ist es bei schonender Behandlung der Backoberfläche in vielen Fällen nicht möglich, Verkrustungen oder Verschmutzungen zu entfernen.

Zur Lösung dieses Zielkonfliktes sind Laserreinigungssysteme bekannt, die bei bestehenden Anlagen nachgerüstet werden können und als modulare Einrichtung im Bedarfsfall zugestellt werden können oder als integraler Bestandteil der Backmaschine ausgeführt sind. Diese Laserreinigungssysteme sind meist derart ausgestaltet, dass eine Schnittstelle zur Verbindung mit der Backmaschine vorgesehen ist, und dass die Laseranordnung mechanisch und/oder steuertechnisch mit der Backmaschine gekoppelt ist.

Eine derartige Konstruktion ist beispielsweise aus der WO 2014/020117 bekannt. Die vorliegende Erfindung ist insbesondere eine Weiterentwicklung einer in dieser Publikation offenbarten Vorrichtung.

Zur Reinigung von Backplatten mit einer reliefartig ausgestalteten Backoberfläche oder mit seitlich verlaufenden Dichtleisten, kann es vorteilhaft sein, wenn der Winkel, mit dem die Laserstrahlung auf die zu reinigende Fläche trifft, veränderbar ist. Gemäß Stand der Technik sind Vorrichtungen bekannt, bei denen der Laserkopf um zwei Achsen drehbar angeordnet ist, sodass eine Wahl des Abstrahlwinkels des Lasers erfolgen kann. Nachteilig an diesen Konstruktionen ist, dass die Komponenten zur Drehung des Laserkopfs die Vorrichtung vergrößern, womit eine Einführung zwischen die Backplatten einer nur teilweise aufgeklappten Backzange nicht möglich ist. Das vollständige Aufklappen einer Backplatte zur Reinigung hingegen bedarf einer Anpassung einer Backmaschine, die in der Praxis ebenfalls zu Problemen führen kann.

Aufgabe der Erfindung ist es nun die Nachteile des Standes der Technik zu überwinden. Dies umfasst gegebenenfalls, dass eine Laseranordnung geschaffen wird, die zur Reinigung von Backplatten einer Backzange geeignet ist, wobei die Backzangen nur so weit aufgeklappt werden müssen, wie es dem Regelbetrieb der Backvorrichtung entspricht. Darüber hinaus ist es eine Aufgabe der Erfindung, eine Reinigung von Backplatten zu ermöglichen, die reliefartig ausgestaltete Backoberflächen und/oder auch Dichtleisten oder Ausdampfleisten aufweisen.

Die erfindungsgemäße Aufgabe wird insbesondere durch die Merkmale der unabhängigen Patentansprüche gelöst.

Gegebenenfalls betrifft die Erfindung eine Laseranordnung zum Reinigen von reliefartig ausgestalteten Backoberflächen und gegebenenfalls zum Reinigen von Dampf- oder Dichtleisen von Backplatten einer Backmaschine, umfassend eine Laserquelle zur Ausgabe eines Laserstrahls auf einen örtlich wählbaren Zielbereich durch fortlaufende Änderung der Ausgaberichtung des Laserstrahls und Abfahren einer den Zielbereich bildenden Kontur, eine entfernt von der Laserquelle und im Zielbereich der Laserquelle angeordnete Umlenkoptik zur Umlenkung des Laserstrahls und zur Projektion des durch die Kontur gebildeten Zielbereichs auf die zu reinigende Backplatte entlang einer Projektionsrichtung.

Gegebenenfalls ist vorgesehen, dass die Umlenkoptik eine Verstellmöglichkeit zur Veränderung der Projektionsrichtung und der Austrittsrichtung des Laserstrahls aufweist.

Gegebenenfalls ist vorgesehen, dass die Umlenkoptik mindestens zwei Umlenkelemente aufweist, die von der Laserquelle ausgehende Laserstrahlen in unterschiedlichen Winkel umlenken, oder dass die Umlenkoptik mindestens zwei als Reflektionselemente wie insbesondere als Spiegel ausgebildete Umlenkelemente aufweist, die gegenüber der Laserquelle in unterschiedlichen Winkeln angeordnet sind, oder dass die Umlenkoptik mindestens ein Umlenkelement zur Umlenkung des Laserstrahls aufweist, das mindestens zwei wählbare Stellungen aufweist, sodass mindesten zwei wählbare, unterschiedliche Projektionsrichtungen vorgesehen sind.

Gegebenenfalls ist vorgesehen, dass die Umlenkoptik oder deren Umlenkelement(e) bewegbar angeordnet ist oder sind, und/oder dass die Umlenkoptik oder deren Umlenkelement(e) um eine Drehachse drehbar, schwenkbar oder rotierbar angeordnet ist oder sind, wobei die Drehachse in etwa der mittleren Ausgaberichtung des Laserstrahls aus der Laserquelle entspricht.

Gegebenenfalls ist vorgesehen, dass ein von einem Grundkörper abstehendes, insbesondere rohrförmig ausgebildetes Trägerelement vorgesehen ist, dass die Umlenkoptik im Bereich des freien Endes des Trägerelements vorgesehen und insbesondere fest mit dem Trägerelement verbunden ist.

Gegebenenfalls ist vorgesehen, dass das Trägerelement über einen Trägerelementantrieb bewegbar, drehbar oder um die Drehachse drehbar angeordnet ist.

Gegebenenfalls ist vorgesehen, dass der Trägerelementantrieb und/oder die Laserquelle im Bereich des Grundkörpers oder am Grundkörper angeordnet sind.

Gegebenenfalls ist vorgesehen, dass der Zielbereich der Laserquelle wahlweise auf eines der Umlenkelemente oder auf eines der als Reflektionselemente ausgebildetes Umlenkelement gerichtet ist.

Gegebenenfalls ist vorgesehen, dass der Zielbereich und die den Zielbereich bildende Kontur streifenförmig oder linienförmig ausgebildet sind, oder dass der Zielbereich und die den Zielbereich bildende Kontur streifenförmig oder linienförmig ausgebildet sind und oszillierend oder wiederholt von dem Laserstrahl abgefahren werden. Gegebenenfalls ist vorgesehen, dass eine Steuerkurve vorgesehen ist, die von einem Abtastelement zur Aktivierung oder zur Deaktivierung der Laserquelle abgetastet ist, und dass das Abtastelement gegenüber der Steuerkurve durch Betätigung des Trägerelementantriebs und gegebenenfalls durch Drehung des Trägerelements bewegt wird oder ist und dass dadurch die Laserquelle in Abhängigkeit von der Projektionsrichtung aktiviert oder deaktiviert ist.

Gegebenenfalls ist vorgesehen, dass eine Absaugung vorgesehen ist, deren Absaugleitung in jenen Bereich ragt, in dem der Laserstrahl austritt oder an dem der Laserstrahl auf das zu reinigende Objekt trifft.

Gegebenenfalls ist vorgesehen, dass eine Bewegungsvorrichtung zur translatorischen Bewegung des Trägerelements oder der Umlenkoptik vorgesehen ist, wobei die Richtung der translatorischen Bewegung insbesondere der mittleren Ausgaberichtung des Laserstrahls aus der Laserquelle, dem Verlauf des Trägerelements oder der Drehachse folgt, und wobei gegebenenfalls eine zweite Richtung der translatorischen Bewegung vorgesehen ist, die im Wesentlichen quer zur ersten Richtung und insbesondere vertikal verläuft.

Gegebenenfalls ist vorgesehen, dass die Laseranordnung als ein mit einer Backmaschine verbindbares oder verbundenes Modul ausgebildet ist.

Gegebenenfalls betrifft die Erfindung eine Anordnung umfassend eine Backvorrichtung mit einem Endlosförderer, wobei an dem Endlosförderer Backzangen angeordnet sind, wobei die Backzangen jeweils eine Unterplatte und eine schwenkbar mit der Unterplatte verbundene Oberplatte umfassen, wobei die Backzangen entlang des Endlosförderers jeweils nacheinander: von einer Beschickungsvorrichtung zum Auftrag einer Backmasse in eine geöffnete Backzange, zu einer Vorrichtung zum Schließen der Backzange, durch einen beheizten Backraum, weiter zu einer Vorrichtung zum Öffnen der Backzange, und dann zu einer Produktentnahmevorrichtung zur Entnahme der gebackenen Produkte aus der Backzange befördert werden, wobei eine erfindungsgemäße Laseranordnung vorgesehen ist.

Gegebenenfalls ist vorgesehen, dass eine Vorrichtung zum Öffnen der Backzange und eine Vorrichtung zum Schließen der Backzange vorgesehen sind, und dass die Backzangen zwischen den beiden Vorrichtung um eine Öffnungswinkel geöffnet sind, und dass die Umlenkoptik und zumindest ein Teil des Trägerelements seitlich, also quer zur Bewegungsrichtung des Endlosförderers in die Backzange und zwischen die Oberplatte und die Unterplatte ragt.

Gegebenenfalls ist vorgesehen, dass die Projektionsrichtung durch Drehung der Umlenkoptik oder durch Drehung des mit der Umlenkoptik verbundenen Trägerelements wahlweise auf die von innen auf die Oberplatte oder von innen auf die Unterplatte gerichtet ist.

Gegebenenfalls ist vorgesehen, dass der Einfallswinkel der Projektionsrichtung auf die Backzange durch wahlweises Richten des Zielbereichs der Laserquelle auf eines der Umlenkelemente oder auf eines der Reflektionselemente veränderbar ist.

Gegebenenfalls ist vorgesehen, dass die Umlenkoptik mindestens zwei Umlenkelemente aufweist, dass der Zielbereich der Laserquelle wahlweise auf eines der beiden Umlenkelemente gerichtet ist, dass, wenn der Zielbereich der Laserquelle auf das eine Umlenkelement gerichtet ist, die Projektionsrichtung einen ersten Einfallswinkel auf die zu reinigende Backplatte aufweist, dass, wenn der Zielbereich der Laserquelle auf das andere Umlenkelement gerichtet ist, die Projektionsrichtung einen zweiten Einfallswinkel auf die zu reinigende Backplatte aufweist, und dass die beiden Einfallswinkel in entgegengesetzten Richtungen von einem lotrecht auf die Backplatte fallenden Einfallswinkel abweichen.

Gegebenenfalls ist vorgesehen, dass die Umlenkoptik mindestens drei Reflektionselemente aufweist, dass der Zielbereich der Laserquelle wahlweise auf eines der drei Reflektionselemente gerichtet ist, dass, wenn der Zielbereich der Laserquelle auf das eine Reflektionselement gerichtet ist, die Projektionsrichtung einen ersten Einfallswinkel auf die zu reinigende Backplatte aufweist, dass, wenn der Zielbereich der Laserquelle auf ein weiteres Reflektionselement gerichtet ist, die Projektionsrichtung einen zweiten Einfallswinkel auf die zu reinigende Backplatte aufweist, dass die beiden Einfallswinkel in gegengesetzten Richtungen von einem lotrecht auf die Backplatte fallenden Einfallswinkel abweichen, und dass, wenn der Zielbereich der Laserquelle auf ein drittes Reflektionselement gerichtet ist, die Projektionsrichtung einen dritten Einfallswinkel auf die zu reinigende Backplatte aufweist, der zwischen dem ersten und dem zweiten Einfallswinkel liegt, und insbesondere im Wesentlichen lotrecht zur zu reinigende Backplatte verläuft.

Zur Reinigung der Backoberflächen umfasst die Laseranordnung bzw. die Anordnung bevorzugt mehrere Freiheitsgrade. Die aus der Laseranordnung entlang einer Projektionsrichtung austretende Laserstrahlung kann gegebenenfalls durch Schwenken oder Drehen der Umlenkoptik verändert werden. Die Winkeländerung geschieht dabei bevorzugt im Wesentlichen in einer Normalebene der Drehachse dieser Bewegung. Diese Drehachse ist gegebenenfalls in einer Normalebene der Bewegungsrichtung der Backzangen durch den Endlosförderer angeordnet. Insbesondere verlaufen diese Drehachse und gegebenenfalls auch das Trägerelement quer zur Bewegungsrichtung der Backzangen und bevorzugt seitlich in die geöffneten Backzangen hinein.

Eine weitere Relativbewegung kann durch eine Bewegung der Backzangen selbst erfolgen. Wird die Laseranordnung im Wesentlichen ortsfest gehalten, wobei die Projektionsrichtung auf eine Backfläche der Backzange gerichtet ist, und wird in weiterer Folge der Endlosförderer der Backvorrichtung betätigt, so kann ein Streifen der Backzange gereinigt werden. Wird der Endlosförderer weiterbewegt, so kann ein Streifen mehrerer oder aller vom Laserstrahl erfasster Backplatten gereinigt werden. Um nun den Reinigungsbereich zu erweitern, kann die Umlenkoptik bzw. die austretende Laserstrahlung durch eine Bewegungsvorrichtung gegebenenfalls auch translatorisch bewegt werden. Diese translatorische Bewegung bzw. deren Richtung verläuft bevorzugt quer zur Förderrichtung der Backzangen entlang des Endlosförderers und insbesondere entlang der Drehachse der Laseranordnung.

Die Laserquelle kann in allen Ausführungsformen derart ausgestaltet sein, dass ein Laserstrahl in unterschiedliche bzw. in wählbare Richtungen ausgegeben werden kann. Derartige Laser sind beispielsweise als Markierungslaser zur Markierung oder Beschriftung von Gegenständen aus Stahl, Kunststoff oder anderen Werkstoffen bekannt. Derartige Laserquellen sind meist kompakte Module, die über eine Programmschnittstelle bzw. Steuerungsschnittstelle angesteuert werden können, sodass der Laserstrahl in die gewünschte Richtung abgegeben wird.

Die Laserquelle ist gemäß einer bevorzugten Ausführungsform an einem Grundkörper angeordnet. Gegebenenfalls kann die Laserquelle oder der Grundkörper mit einem Trägerelement insbesondere translatorisch bewegbar angeordnet sein.

Gemäß einer bevorzugten Ausführungsform verläuft die Ausgaberichtung der Laserquelle im Wesentlichen waagrecht oder geneigt. Um nun die Laserstrahlung auf die zu reinigende Backplatte umzulenken, ist eine Umlenkoptik vorgesehen. Diese Umlenkoptik kann beispielsweise Umlenkelemente wie Spiegel, Reflektionselemente, oder andere optische Elemente aufweisen, die zur Umlenkung eines Laserstrahls geeignet sind.

Bevorzugt umfasst die Umlenkoptik eine Verstellmöglichkeit zur Veränderung der Projektionsrichtung und des Austrittswinkels des Laserstrahls. Durch diese Verstellmöglichkeit kann ein aus der Laserquelle austretender Laserstrahl in unterschiedlichen Winkeln umgelenkt werden. Diese Verstellmöglichkeit kann beispielsweise ein bewegbares Umlenkelement wie beispielsweise ein Spiegel sein. Gemäß einer bevorzugten Ausführungsform umfasst die Umlenkoptik mehrere Umlenkelemente. Die Laserquelle ist dazu eingerichtet oder geeignet, einen Laserstrahl wahlweise auf mindestens eines der Umlenkelemente zu richten. Durch unterschiedliche Ausgestaltung der Umlenkelemente, beispielsweise durch Anordnen der Reflektionselementen in unterschiedlichen Winkeln, kann der Austrittswinkel des Laserstrahls je nach Wahl des Umlenkelements verändert werden.

Zur effizienten Reinigung von Backoberflächen und der Dichtleisten kann es von Vorteil sein, wenn der Laserstrahl eine möglichst große Fläche in möglichst kurzer Zeit reinigt. Aus diesem Grund wird der Laserstrahl bevorzugt nicht statisch, punktförmig auf die zu reinigende Backoberfläche geleitet sondern auf einen wählbaren Zielbereich gerichtet. Dieser Zielbereich wird insbesondere durch eine Kontur gebildet, die der Laserstrahl abfährt. Dabei kann die Kontur periodisch oder oszillierend abgefahren werden. Gegebenenfalls kann die Kontur wiederkehrend oder wiederholt abgefahren werden. Durch das schnelle Abfahren des Zielbereichs wird der Wirkungsbereich des Lasers vergrößert. Gemäß einer bevorzugten Ausführungsform ist der Zielbereich im Wesentlichen streifen- oder linienförmig ausgebildet. Dieser Zielbereich kann bevorzugt wahlweise auf eines der Umlenkelemente gerichtet werden, sodass der Zielbereich umgelenkt und auf die Backoberfläche projiziert wird. Die Projektion dieses Zielbereichs geschieht entlang einer Projektionsrichtung. Die Projektionsrichtung kann nun durch die Verstellmöglichkeit der Umlenkoptik verändert werden.

Insbesondere zur Reinigung der seitlich angeordneten Dampf- oder Dichtleisten ist es vorteilhaft, wenn die Projektionsrichtung von der lotrechten Richtung abweicht. Dadurch können auch innenliegende Ecken effizient gereinigt werden.

Gemäß einer bevorzugten Ausführungsform ist die Umlenkoptik im Wesentlichen passiv ausgeführt und umfasst im Wesentlichen starr mit einem Trägerelement verbundene Spiegel. Das Trägerelement kann beispielsweise als auskragendes Trägerelement ausgebildet sein. Insbesondere kann das Trägerelement auch rohrförmig ausgebildet sein und an seinem freien Enden die Umlenkoptik umfassen. Durch diese Ausgestaltung kann das freie Ende des Trägerelements platzsparend ausgebildet sein, wodurch die Laseranordnung zwischen die spitzwinkelig aufgeklappten Backplatten eingeführt werden kann. Insbesondere ist es vorteilhaft, wenn die Backplatten nur jenen Öffnungswinkel aufweisen müssen, den sie beim herkömmlichen Betrieb der Backmaschine aufweisen. Dieser Winkel beträgt beispielsweise zwischen 30° und 60°, insbesondere etwa 35 ° bis 40 °.

Durch die zusätzliche Drehbarkeit der Umlenkoptik kann die Projektionsrichtung um einen weiteren Freiheitsgrad gedreht bzw. bewegt werden. Dadurch können beispielsweise auch kastenförmig ausgebildete Backplatten gereinigt werden, die Dichtleisten und/oder Dampfleisten aufweisen. Ferner wird durch die Drehbarkeit der vorteilhafte Effekt bewirkt, dass die Projektionsrichtung bzw. die Laserstrahlung durch Betätigung des Trägerelementantriebs von der unteren Backplatte auf die obere Backplatte oder von der oberen Backplatte auf die untere Backplatte gerichtet werden kann. Die Reinigung der oberen Backplatte und der unteren Backplatte geschieht bevorzugt in gleicher Weise.

Um zu vermeiden, dass bei der Drehung der Projektionsrichtung Laserstrahlung zwischen den Backplatten austritt, sind gegebenenfalls eine Steuerkurve und ein Abtastelement vorgesehen. Diese Elemente sind derart ausgestaltet, dass die Laserquelle deaktiviert ist, wenn die Projektionsrichtung auf keine Backplatte gerichtet ist.

Alternativ oder zusätzlich kann die Umlenkoptik auch derart ausgestaltet sein, dass die Projektionsrichtung nicht nur in einer Ebene, die parallel zu einer Dicht- oder Dampfleiste verläuft, verstellt werden, sondern schräg zum Verlauf einer Dicht- oder Dampfleiste, sodass auch alleine durch die Umlenkoptik eine kastenförmig ausgebildete Backplatte gereinigt werden kann.

Ein exemplarisches Verfahren zur Reinigung von reliefartig ausgestalteten Backoberflächen und Dampf- oder Dichtleisten von Backplatten kann beispielsweise eine oder mehrere folgende Schritte umfassen:
In einem ersten Schritt kann die Backvorrichtung in einen Reinigungsmodus versetzt werden, bei dem kein Teigaufguss erfolgt. In einem weiteren Schritt kann die Laseranordnung aktiviert werden. Die Laseranordnung kann beispielsweise als an die Backvorrichtung andockbares oder angedocktes Modul ausgebildet sein. Bevorzugt wird die Laseranordnung im Bereich des Vorkopfs der Backvorrichtung an die Backvorrichtung angedockt. In diesem Bereich sind die Backzangen während des normalen Backbetriebs zum Teigaufguss und zur Produktentnahme geöffnet. Im Reinigungsmodus hingegen ragt die Laseranordnung zwischen die Backplatten, um eine Reinigung durchzuführen. Bei einer modulartig ausgestalteten Laseranordnung muss demnach gegebenenfalls zuerst eine Verbindung mit der Backvorrichtung hergestellt werden. Insbesondere geschieht die Verbindung mechanisch und/oder steuerungstechnisch.
In einem weiteren Schritt wird die Laserquelle aktiviert, sodass Laserstrahlung der Laserquelle in einen Zielbereich ausgegeben wird. In diesem Zielbereich ist die Umlenkoptik angeordnet, durch die die Laserstrahlung umgelenkt und insbesondere auf eine der beiden Backplatten der Backzange gelenkt wird. Um nun einen Bereich oder die gesamte Backplatte zu reinigen, kann ein Freiheitsgrad der Laseranordnung verwendet werden, um den Laserstrahl über die gesamte Backplatte zu führen. Gegebenenfalls wird auch der Endlosförderer der Backvorrichtung betätigt, um eine Relativbewegung zwischen dem Laserstrahl und den Backplatten zu bewirken. Gemäß einer bevorzugten Ausführungsform werden die Backzangen entlang des Endlosförderers bewegt, wobei die Laseranordnung in einem ersten Schritt im Wesentlichen unbewegt bleibt, sodass ein Streifen aller Backzangen gereinigt wird. In einem zweiten Schritt wird die Laseranordnung bzw. der Laserstrahl translatorisch, quer zur Förderrichtung der Backplatten bewegt, sodass ein zweiter, parallel zum ersten Streifen verlaufender zweiter Streifen aller Backzangen gereinigt wird.

Dieser Vorgang kann so oft wiederholt werden, bis alle Unterplatten und/oder alle Oberplatten gereinigt sind.

Um Ecken und Kanten der Dampf- oder Dichtleisten zu reinigen und insbesondere auch um die reliefartige Struktur von Backzangen besser reinigen zu können, kann der Einfallswinkel der Projektionsrichtung verstellt werden. Diese unterschiedlichen Einfallswinkel werden insbesondere durch die Verstellmöglichkeit der Umlenkoptik bewirkt. Die unterschiedlichen Einfallswinkel liegen bevorzugt in einer Ebene, die einer Normalebene der Förderrichtung der Backzangen entspricht.

Sind die Unterplatten gereinigt, so kann die Umlenkoptik beispielsweise um 180° gedreht werden, sodass die Laserstrahlen auf die oberen Backplatten gerichtet sind. Die Reinigung der Oberplatten, insbesondere die streifenförmige Reinigung, kann analog zur Reinigung der Unterplatten erfolgen.

Ferner kann die Laseranordnung eine Absaugung umfassen, die insbesondere die bei der Reinigung entstehenden Verbrennungsgase bzw. abplatzende Partikel absaugen kann.

Die Erfindung betrifft gegebenenfalls eine Anordnung mit einer Backvorrichtung, wobei eine Laseranordnung vorgesehen ist, wobei eine Schnittstelle zur Verbindung mit der Laseranordnung vorgesehen ist, wobei die Schnittstelle eine mechanische Schnittstelle zur Koppelung der Laseranordnung mit der Backmaschine und/oder eine Steuerungsschnittstelle zur Koppelung der Steuerung der Backmaschine mit der Steuerung der Laseranordnung umfasst, wobei die Laseranordnung einen Laserkopf umfasst, von dem Laserstrahlung auf einen Bearbeitungsbereich auf der Backoberfläche leitbar ist und dass der Laserkopf und die Backoberfläche relativ zueinander zumindest einen antreibbaren Freiheitsgrad aufweisen und/oder wobei die Backoberfläche und/oder der Laserkopf durch zumindest einen Antrieb antreibbar und bewegbar sind.

Als Laseranordnung kann jede Form einer Laseranordnung zum Einsatz kommen, die dazu geeignet ist, die Verschmutzungen von der Backoberfläche zu entfernen. Bevorzugt kommen jedoch handelsübliche Industrielaser, wie insbesondere Markierungslaser zum Einsatz. Der Laser bearbeitet durch Oszillation einen beispielsweise 10 bis ca. 120mm breiten Streifen der Backoberfläche, wobei der Streifen bevorzugt etwa 16mm breit ist. Je nach Breite des Streifens kann es notwendig sein, dass die Backoberfläche nicht in einem, sondern in mehreren Durchgängen gereinigt wird. Entspricht die Breite des Bearbeitungsbereichs der Laseranordnung der Breite der Backplatte, so kann die Bearbeitung auch in einem Schritt erfolgen.

In bevorzugter Weise kommen Festkörperlaser oder C02-Laser gepulst oder im Dauerbetrieb zum Einsatz. Beispiele für verwendbare Laseranordnungen sind ein TEA-CO2 Laser oder ein Festkörperlaser mit einer Wellenlänge von 10,6µm.

Die Laserleistung kann dabei zwischen 20 und 500 Watt liegen. Bevorzugt liegt die Leistung bei etwa 100 bis 200 Watt. Besonders vorteilhaft haben sich in der Praxis Faserlaser mit einer Wellenlänge von 1,06µm und einer Leistung von etwa 60 Watt herausgestellt.

Die tatsächlich benötigte Laserleistung ist ferner gegebenenfalls von der Oszillationsfrequenz, der Oszillationsamplitude, der Art und des Grades der Verschmutzung abhängig.

Die Laseranordnung wird gegebenenfalls mit einer Backvorrichtung verbunden oder gekoppelt. Dazu weisen sowohl die Backmaschine als auch die Laseranordnung gegebenenfalls eine Schnittstelle auf. Die Schnittstelle kann einerseits eine Steuerungsschnittstelle und andererseits eine mechanische Schnittstelle sein.

Die Steuerungsschnittstelle verbindet gegebenenfalls die Mittel zur Steuerung der Laseranordnung und die Mittel zur Steuerung der Backmaschine mit einer Steuerungseinheit. Dabei kann eine einzige Steuerungseinheit zur Steuerung der Laseranordnung und der Backmaschine geeignet und/oder eingerichtet sein oder jeweils eine Steuerungseinrichtung für die Laseranordnung und eine Steuerungseinrichtung für die Backmaschine vorgesehen sein. Beispielsweise kann zur Reinigung die Geschwindigkeit der bewegten Backflächen variiert werden. Ferner kann auch die Steuerung der Laseranordnung von dem Verschmutzungsgrad und der Geschwindigkeit der Backoberfläche abhängig gemacht werden. So können beispielsweise durch die Verbindung über die Schnittstelle Steuerparameter wie die Laserleistung, die Oszillationsfrequenz oder die Oszillationsamplitude verändert werden.

Ferner betrifft die Schnittstelle gegebenenfalls auch die mechanische Verbindung und/oder Koppelung der Laseranordnung an der Backmaschine. Diese Schnittstelle ist beispielsweise durch herkömmliche Verbindungsmittel wie Schrauben, Bolzen, Klemmvorrichtungen, Führungsmittel etc. gegeben. Grundsätzlich ist jedes Verbindungsmittel geeignet, dass zur Herstellung einer Schnittstelle dienen kann, insbesondere die gewünschte Positionierung einer Laseranordnung an der Backmaschine möglich.

Bei dem erfindungsgemäßen Verfahren wird gegebenenfalls durch die erfindungsgemäße Vorrichtung ein Lichtstrahl mit hoher Intensität, bevorzugt ein Laserstrahl auf die Backoberfläche geleitet. Die Backoberflächen sind in bevorzugter Weise aus einem metallischen Körper gebildet und weisen eine glatte Oberfläche oder vorbestimmte musterförmige Reliefstruktur auf. Trifft der Laserstrahl auf die Backoberfläche, so wird ein großer Teil der Strahlung reflektiert. Trifft der Laserstrahl jedoch auf eine verschmutzte Stelle oder ein Schmutzpartikel, so wird der Laserstrahl von der Verschmutzung absorbiert. Die Energie wird in Wärmeenergie umgewandelt, wodurch das Schmutzpartikel oder der verschmutzte Bereich erwärmt wird bis eine Verbrennung oder eine Verdampfung stattfindet. Durch die unterschiedlichen Absorptions- bzw. Reflexionseigenschaften der Verschmutzungen und der Backoberflächen ist eine besonders effiziente und schonende Reinigung möglich. Das Reinigungsverfahren ist somit ein im Wesentlichen thermisches Verfahren.

Da der Laserstrahl der Laserquelle gemäß einer bevorzugten Ausführungsform eine Kontur abfährt und insbesondere oszillierend oder bewegt ausgegeben wird, wird zur Definition der Ausgaberichtungen oder des Verlaufs der Laserstrahlung, insbesondere die mittlere Ausgaberichtung, angegeben. Wird die Laserstrahlung beispielsweise oszillierend entlang einer streifenförmigen oder linienförmigen Kontur ausgegeben, so wird die direkte Verbindung zwischen Laserquelle und der Mitte des Zielbereichs oder der Mitte der Kontur als Ausgaberichtung bzw. als mittlere Ausgaberichtung definiert. Der Zielbereich wird durch die Umlenkoptik umgelenkt bzw. auf eine Backoberfläche projiziert. Die Projektionsrichtung wird ebenfalls als jene Richtung definiert, die der mittleren Richtung der oszillierend oder bewegt ausgegebenen und umgelenkten Laserstrahlung entspricht. Auch der Einfallswinkel der Projektionsrichtung auf die Backplatte ist somit bevorzugt als Einfallsrichtung der mittleren Strahlungsrichtung definiert.

In weiterer Folge wird die Erfindung anhand der Figuren weiter beschrieben, wobei Figur 1 eine schematische Darstellung einer Backzange und eines Teils einer Laseranordnung, Figur 2 eine Aufsicht auf einen Teil einer Laseranordnung, Figur 3 einen Schnitt des Trägerelements einer exemplarischen Umlenkoptik, Figur 4 eine schematische Detailansicht eines Teils einer exemplarischen Umlenkoptik, Figur 5 einen Schnitt mit der Steuerkurve und einem Abtastelement und Figur 6 eine schematische Ansicht einer Anordnung mit einer Backvorrichtung zeigen.

Wenn nichts anderes angegeben, so entsprechen die Bezugszeichen folgenden Komponenten: Backoberfläche 1, Dichtleiste oder Ausdampfleiste 2, Backplatte 3, Backmaschine 4, Laserquelle 5, Laserstrahl 6, Zielbereich 7, Kontur 8, Umlenkoptik 9, Projektionsrichtung 10, Umlenkelement 11, Drehachse (des Trägerelements) 12, Grundkörper 13, Trägerelement 14, Freies Ende (des Trägerelements) 15, Trägerelementantrieb 16, Steuerkurve 17, Abtastelement 18, Absaugung 19, Absaugleitung 20, Richtung(en) (der translatorischen Bewegung(en)) 21, Endlosförderer 22, Backzange 23, Oberplatte 24, Unterplatte 25, Beschickungsvorrichtung 26, Vorrichtung (zum Schließen der Backzange) 27, Backraum 28, Vorrichtung (zum Öffnen der Backzange) 29, Einfallswinkel 30, Produktentnahmevorrichtung 31.

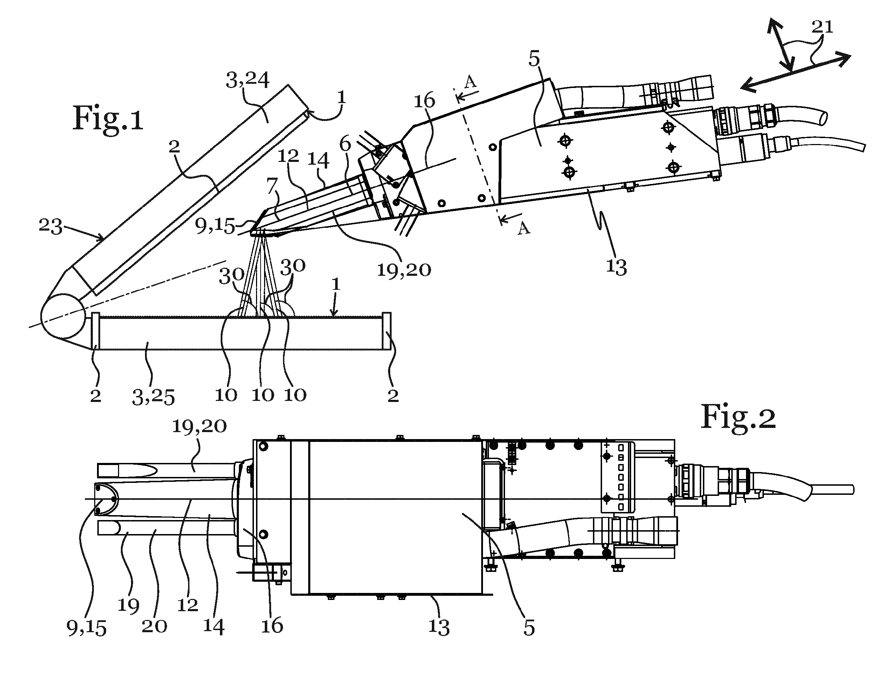

Figur 1 zeigt eine schematische Ansicht zumindest eines Teils einer Laseranordnung und einer Anordnung umfassend eine Backvorrichtung. Von der Backvorrichtung ist exemplarisch eine Backzange 23 dargestellt, die zwei Backplatten 3 umfasst, nämlich eine Oberplatte 24 und eine Unterplatte 25. Die beiden Platten 24, 25 sind scharnierartig miteinander verbunden und können dadurch von einer Vorrichtung (27, 29) zum Öffnen und zum Schließen der Backzange 23 geöffnet oder geschlossen werden.

Jede Backplatte 3 umfasst bevorzugt eine Backoberfläche 1. Diese Backoberfläche 1 ist jene Fläche der Backplatte 3, mit der der Teig oder die Backmasse in Berührung kommt und die durch die erfindungsgemäße Anordnung gereinigt werden kann. Gegebenenfalls umfasst die Backplatte 3 eine oder mehrere Dicht- oder Ausdampfleisten 2. Diese Ausdampf- oder Dichtleisten 2 dienen der Abdichtung einer durch die Backplatten 3 gebildeten Backform und gegebenenfalls zur Zurückhaltung der Backmasse beim Ausdampfen des in der Backmasse enthaltenen Wasserbestandteils. Die Dicht- bzw. Ausdampfleisten 2 überragen die Backoberfläche 1 der Backplatte 3 gegebenenfalls, wodurch ein Winkel entsteht, der bevorzugt von der erfindungsgemäßen Anordnung reinigbar ist.

Die Laseranordnung umfasst eine Laserquelle 5 zur Ausgabe eines Laserstrahls 6 in einen Zielbereich 7. Im Zielbereich 7 ist eine Umlenkoptik 9 vorgesehen, die dazu eingerichtet ist, den Laserstrahl 6 entlang mehrerer Projektionsrichtungen 10 auf die Backplatte 3 zu lenken.

Insbesondere umfasst die Laseranordnung mehrere Freiheitsgrade zur Veränderung der Ausgaberichtung bzw. der Projektionsrichtung 10 des Laserstrahls. Die Laseranordnung umfasst gegebenenfalls ein Trägerelement 14, das in der vorliegenden Ausführungsform im Wesentlichen rohrförmig ausgebildet ist. Am freien Ende 15 des Trägerelements 14 ist die Umlenkoptik 9 vorgesehen. Gegebenenfalls ist zur Bewegung des Trägerelements 14 und insbesondere zur Bewegung der Umlenkoptik 9 ein Trägerelementantrieb 16 vorgesehen. In der vorliegenden Ausführungsform ist der Trägerelementantrieb 16 ein Drehantrieb zur Drehung des Trägerelements 14 um die Drehachse 12.

Bevorzugt umfasst die Laseranordnung einen Grundkörper 13, der im Wesentlichen starr oder gegebenenfalls bewegbar angeordnet ist. Gegebenenfalls ist eine Absaugung 19 mit einer Absaugleitung 20 zur Absaugung von Schmutzpartikeln oder Gasen vorgesehen.

Ferner umfasst die Laseranordnung eine Einrichtung zur translatorischen Bewegung entlang einer Richtung 21, oder entlang zweier translatorischer Richtungen. Gegebenenfalls folgt die Richtung 21 der translatorischen Bewegung im Wesentlichen der Drehachse 12 oder dem Verlauf des Trägerelements 14.

Die Projektionsrichtung 10 ist durch die spezielle Ausgestaltung der Umlenkoptik 9 in unterschiedlichen Einfallswinkeln 30 auf die Backoberfläche 1 richtbar. Bevorzugt sind zumindest zwei unterschiedliche Projektionsrichtungen 10 erzielbar, wobei die beiden Winkel, ausgehend von der Umlenkoptik 9, bevorzugt beidseitig einer orthogonalen Richtung verschwenkt sind. In der vorliegenden Ausführungsform sind drei unterschiedliche Projektionsrichtungen 10 bzw. drei unterschiedlichen Einfallswinkel 30 dieser Projektionsrichtungen 10 eingezeichnet. Die mittlere Projektionsrichtung 10 fällt im Wesentlichen in einem 90-grädigen Einfallswinkel 30 auf die Backoberfläche 1. Die beiden anderen Projektionsrichtungen 10 sind in unterschiedlichen Winkeln von diesem 90-grädigen Einfallswinkel 30 verschwenkt. Dadurch kann gewährleistet werden, dass die Laserstrahlen 6 der Laserquelle 5 auch in die Ecken der Dichtleisten 2 eindringen können.

Figur 2 zeigt eine Aufsicht auf die in Figur 1 dargestellte Laseranordnung, wobei die in Figur 1 beschriebenen Komponenten den Komponenten der Figur 2 entsprechen.

Gemäß der Ausführungsform der Figur 2 umfasst die Absaugung 19 zwei Absaugleitungen 20, wobei eine der Absaugungsleitungen 20 auf die Unterplatte 25, und eine der Absaugungsleitungen 20 auf die Oberplatte 24 gerichtet ist. Je nach Drehstellung oder Stellung der Umlenkoptik 9 bzw. je nach Projektionsrichtung 10 wird die Oberplatte 24 oder die Unterplatte 25 bearbeitet, wobei die jeweilige Absaugung 19 bzw. die jeweilige Absaugleitung 20 zur Absaugung verwendet wird.

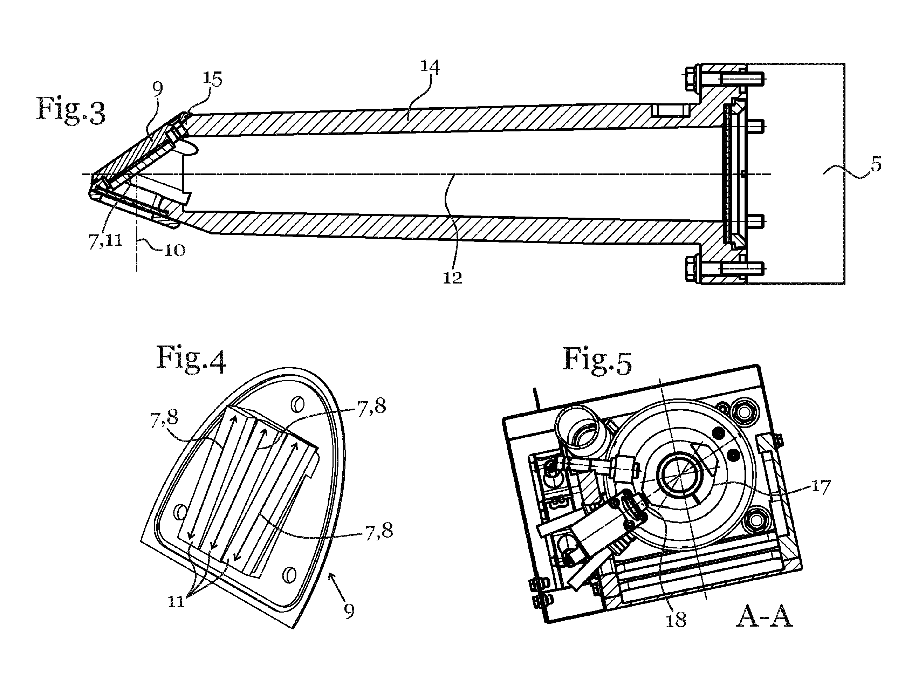

Figur 3 zeigt eine schematische Schnittdarstellung von Teilen einer erfindungsgemäßen Laseranordnung. Das Trägerelement 14 ist im Wesentlichen rohrförmig und bevorzugt geschlossen-rohrförmig ausgebildet, wobei im Bereich des freien Endes 15 des Trägerelements 14 die Umlenkoptik 9 vorgesehen ist. Die Umlenkoptik 9 umfasst in allen Ausführungsformen gegebenenfalls einen Ausgang zum Austritt der Laserstrahlung, der gegebenenfalls durch ein durchsichtiges Element, wie beispielsweise durch eine Linse oder eine plane durchsichtige Scheibe verschlossen ist. Die Umlenkoptik 9 umfasst zumindest ein Umlenkelement 11, das im Zielbereich 7 der Laserquelle 5 vorgesehen ist, sodass der Laserstrahl 6 auf das Umlenkelement 11 der Umlenkoptik 9 trifft, um dann in Richtung Projektionsrichtung 10 abgelenkt zu werden. Die mittlere Richtung der ausgegebenen Laserstrahlung kann in allen Ausführungsformen beispielsweise, wie auch in dem vorliegenden Fall, der Drehachse 12 des Trägerelements 14 oder dem Verlauf des Trägerelements 14 folgen. Bevorzugt ist das Trägerelement 14, bzw. dessen freies Ende 15 zusammenlaufend oder im Wesentlichen konisch ausgeführt, sodass die Laseranordnung in den durch die Backzange gebildeten Zwickel eingeführt werden kann.

Gegebenenfalls ist in allen Ausführungsformen auch im Bereich des Übergangs zwischen der Laserquelle 5 und dem Trägerelement 14 eine dichtende, durchsichtige Scheibe, wie beispielsweise eine Glasscheibe vorgesehen, um den Innenbereich des Trägerelement 14 von der Laserquelle räumlich zu trennen. Gegebenenfalls umfassen in allen Ausführungsformen optische Elemente wie Umlenkelemente oder durchsichtige Scheiben eine Kühlung, eine Spülluftanordnung oder eine Sperrluftanordnung.

Figur 4 zeigt eine schematische Ansicht eines Teils einer Umlenkoptik 9. Die Umlenkoptik 9 umfasst in der vorliegenden Ausführungsform drei Umlenkelemente 11. Diese drei Umlenkelemente 11 sind in unterschiedlichen Winkeln starr mit einer Grundplatte der Umlenkoptik 9 verbunden. Gemäß einer weiteren Ausführungsform können auch mehr oder weniger Umlenkelemente 11 in unterschiedlichen Winkeln vorgesehen sein. Gemäß einer weiteren, nicht dargestellten Ausführungsform, können ein oder mehrere Umlenkelemente auch bewegbar angeordnet sein, um unterschiedliche Projektionsrichtungen bewirken zu können.

Gemäß einer bevorzugten Ausführungsform sind die Umlenkelemente 11 jedoch im Wesentlichen starr mit der Grundplatte verbunden. Der aus der Laserquelle 5 austretende Laserstrahl 6 wird bevorzugt in einen Zielbereich 7 gelenkt. Der Zielbereich 7 wird bevorzugt durch eine Kontur 8 gebildet. Die Kontur 8 wird bevorzugt wiederkehrend oder oszillierend abgefahren. So ist im vorliegenden Fall der Zielbereich 7 im Wesentlichen streifen- oder linienförmig ausgebildet. Die Kontur 8 entspricht somit diesem Streifen bzw. diese Linie. Bevorzugt wird wahlweise der Zielbereich 7 auf eines der Umlenkelemente 11 gelenkt. Somit ist der Laserstrahl 6 der Laserquelle 5 bevorzugt auf lediglich eine Kontur 8 bzw. einen der eingezeichneten Zielbereiche 7 gerichtet.

Durch die unterschiedlichen Winkel des oder der Umlenkelemente 11 kann die Projektionsrichtung 10 verändert werden. Durch die streifen- oder linienförmige Form des Zielbereichs 7 wird eine dieser Form entsprechende Form auch auf die Backplatte 3 projiziert.

Die Umlenkelemente 11 sind in der vorliegenden Form als Reflektionselemente, bzw. als Spiegel ausgebildet. Gegebenenfalls können jedoch auch andere Elemente eingesetzt werden, die dazu geeignet sind, den Zielbereich 7 der Laserquelle 5 auf die Backoberfläche 1 umzulenken bzw. zu projizieren. Beispielsweise wären Prismen mögliche Alternativen.

Figur 5 zeigt eine schematische Schnittdarstellung des Schnittverlaufs A-A aus Figur 1. Die Vorrichtung umfasst eine Steuerkurve 17 und ein Abtastelement 18. Durch Drehung des Trägerelements 14 bzw. durch Betätigung des Trägerelementantriebs 16 kommt es zur einer Relativbewegung der Steuerkurve 17 gegenüber dem Abtastelement 18. Das Abtastelement 18 ist steuertechnisch mit der Laserquelle 5 verbunden, sodass diese aktiviert oder deaktiviert werden kann. Durch die Abtastung der Steuerkurve 17 kann die Laserquelle 5 deaktiviert werden, wenn die Projektionsrichtung nicht auf eine Backplatte 3 bzw. nicht auf eine Backoberfläche 1 gerichtet ist. Hingegen kann die Laserquelle 5 durch das Abtastelement 18 in Kombination mit der Steuerkurve 17 aktiviert werden, wenn die Projektionsrichtung 10 auf die zu reinigende Backoberfläche 1 gerichtet ist.

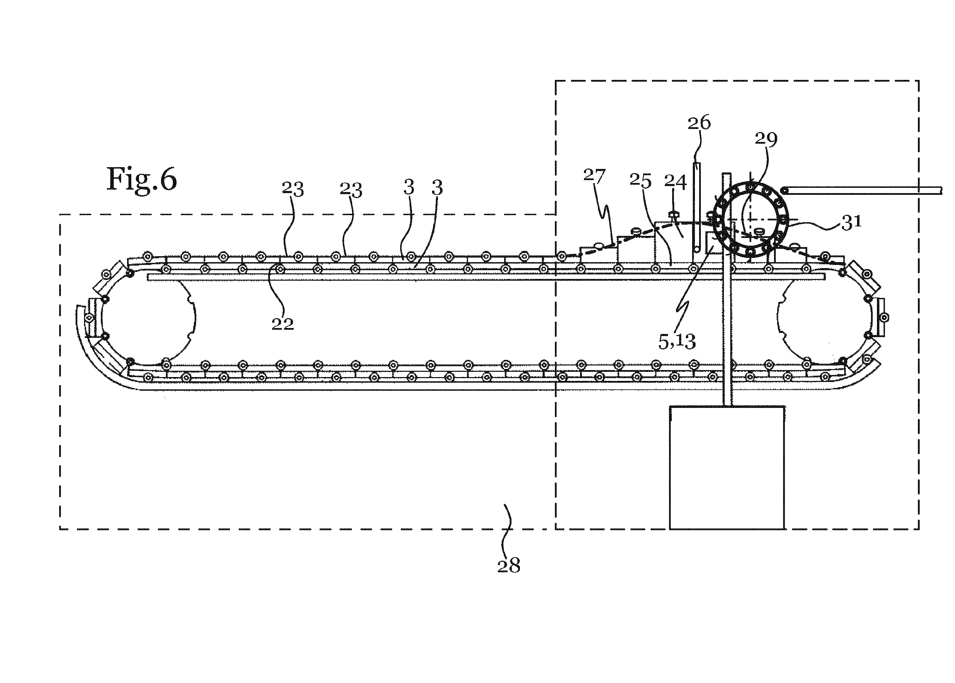

Figur 6 zeigt eine schematische Ansicht von Teilen einer erfindungsgemäßen Anordnung, umfassend einen Endlosförderer 22 entlang dessen Verlaufs mehrere Backzangen 23 angeordnet sind, um im Wesentlichen entlang einer oberen und entlang einer unteren Transportebene befördert zu werden. Die Backzangen 23 umfassen jeweils zwei Backplatten 3, nämlich eine Oberplatte 24 und eine Unterplatte 25. Ferner umfasst die Backvorrichtung folgende schematisch dargestellte Komponenten: eine Beschickungsvorrichtung 26, eine Vorrichtung 27 zum Schließen der Backzangen, eine Vorrichtung 29 zum Öffnen der Backzangen, sowie einen Backraum 28.

Die Anordnung umfasst ferner eine Laserquelle 5, die ein Teil der erfindungsgemäßen Laseranordnung ist.

Wie in der vorliegenden Darstellung der Figur 6 schematisch dargestellt ist, ist die Laseranordnung als Modul ausgebildet, das gegebenenfalls fest mit der Backvorrichtung verbunden ist, oder das bei Bedarf zugestellt und mit der Backmaschine verbunden werden kann. Bevorzugt geschieht die Verbindung bzw. die Anordnung der Laseranordnung in einem Bereich, in dem die Backzangen 23 der Backvorrichtung geöffnet sind, beispielsweise im Bereich der Beschickungsvorrichtung 26 oder im Bereich der Produktabnahmevorrichtung 31, oder zwischen der Beschickungsvorrichtung 26 und der Produktabnahmevorrichtung 31.
Herkömmliche Backvorrichtungen der eingangs genannten Art öffnen die Backzangen in einem Winkel von etwa 30°- 50°, insbesondere um etwa 35° bis 40° durch die erfindungsgemäße Ausgestaltung ist dennoch eine effiziente Reinigung der Backplatten 3 möglich. Dies wird insbesondere durch die spezielle Ausgestaltung des Trägerelements 14, der Umlenkoptik 9 und/oder der Laseranordnung bewirkt.

Gegebenenfalls ist der Grundkörper 13 starr bzw. bodenstehend ausgeführt und gegebenenfalls an einem mobilen Wagen befestigt. Gegebenenfalls ist der Grundkörper 13 translatorisch bewegbar, insbesondere entlang der Richtungen 21 translatorisch bewegbar ausgebildet und an einem bodenstehenden oder ortsfest angeordneten Grundgestell angeordnet.

## Patentansprüche

1. **Laseranordnung** zum Reinigen von reliefartig ausgestalteten Backoberflächen (1) und gegebenenfalls zum Reinigen von Dampf- und/oder Dichtleisen (2) von Backplatten (3) einer Backmaschine (4), umfassend:
- eine Laserquelle (5) zur Ausgabe eines Laserstrahls (6) auf einen örtlich wählbaren Zielbereich (7) durch fortlaufende Änderung der **Ausgaberichtung** des Laserstrahls (6) und Abfahren einer den Zielbereich (7) bildenden Kontur (8),
- eine entfernt von der Laserquelle (5) und im Zielbereich (7) der Laserquelle (5) angeordnete Umlenkoptik (9) zur Umlenkung des Laserstrahls (6) und zur Projektion des durch die Kontur (8) gebildeten Zielbereichs (7) auf die zu reinigende Backplatte (3) entlang einer Projektionsrichtung (10),
**dadurch gekennzeichnet, dass** die Umlenkoptik (9) eine Verstellmöglichkeit zur Veränderung der **Projektionsrichtung (10)** und der Austrittsrichtung des Laserstrahls (6) aufweist.

2. Laseranordnung nach Anspruch 1, **dadurch gekennzeichnet,**
- **dass** die Umlenkoptik (9) mindestens zwei Umlenkelemente (11) aufweist, die von der Laserquelle (5) ausgehende Laserstrahlen (6) in unterschiedlichen Winkel umlenken,
- oder dass die Umlenkoptik (9) mindestens zwei als Reflektionselemente wie insbesondere als Spiegel ausgebildete Umlenkelemente (11) aufweist, die gegenüber der Laserquelle (5) in unterschiedlichen Winkeln angeordnet sind,
- oder dass die Umlenkoptik (9) mindestens ein Umlenkelement (11) zur Umlenkung des Laserstrahls (6) aufweist, das mindestens zwei wählbare Stellungen aufweist,
- sodass mindesten zwei wählbare, unterschiedliche Projektionsrichtungen (10) vorgesehen sind.

3. Laseranordnung nach Anspruch 1 oder 2, **dadurch gekennzeichnet,**
- **dass** die Umlenkoptik (9) oder deren Umlenkelement(e) (11) bewegbar angeordnet ist oder sind,
- und/oder dass die Umlenkoptik (9) oder deren Umlenkelement(e) (11) um eine Drehachse (12) drehbar, schwenkbar oder rotierbar angeordnet ist oder sind, wobei die Drehachse (12) in etwa der mittleren Ausgaberichtung des Laserstrahls (6) aus der Laserquelle (5) entspricht.

4. Laseranordnung nach einem der Ansprüche 1 bis 3, **dadurch gekennzeichnet, dass** ein von einem Grundkörper (13) abstehendes, insbesondere rohrförmig ausgebildetes Trägerelement (14) vorgesehen ist,
dass die Umlenkoptik (9) im Bereich des freien Endes (15) des Trägerelements (14) vorgesehen und insbesondere fest mit dem Trägerelement (14) verbunden ist.

5. Laseranordnung nach einem der Ansprüche 1 bis 4, **dadurch gekennzeichnet, dass** das Trägerelement (14) über einen Trägerelementantrieb (16) bewegbar, drehbar oder um die Drehachse (12) drehbar angeordnet ist.

6. Laseranordnung nach einem der Ansprüche 1 bis 5, **dadurch gekennzeichnet, dass** der Trägerelementantrieb (16) und/oder die Laserquelle (5) im Bereich des Grundkörpers (13) oder am Grundkörper (13) angeordnet sind.

7. Laseranordnung nach einem der Ansprüche 1 bis 6, **dadurch gekennzeichnet, dass** der Zielbereich (7) der Laserquelle (5) wahlweise auf eines der Umlenkelemente (11) oder auf eines der als Reflektionselemente ausgebildetes Umlenkelement (11) gerichtet ist.

8. Laseranordnung nach einem der Ansprüche 1 bis 7, **dadurch gekennzeichnet,**
- **dass** der Zielbereich (7) und die den Zielbereich (7) bildende Kontur (8) streifenförmig oder linienförmig ausgebildet sind,
- oder dass der Zielbereich (7) und die den Zielbereich (7) bildende Kontur (8) streifenförmig oder linienförmig ausgebildet sind **und** oszillierend oder wiederholt von dem Laserstrahl (6) abgefahren werden.

9. Laseranordnung nach einem der Ansprüche 1 bis 8, **dadurch gekennzeichnet,**
- **dass** eine Steuerkurve (17) vorgesehen ist, die von einem Abtastelement (18) zur Aktivierung oder zur Deaktivierung der Laserquelle (5) abgetastet ist,
- und **dass** das Abtastelement (18) gegenüber der Steuerkurve (17) durch Betätigung des Trägerelementantriebs (16) und gegebenenfalls durch Drehung des Trägerelements (14) bewegt wird oder ist,
und **dass** dadurch die Laserquelle (5) in Abhängigkeit von der Projektionsrichtung (10) aktiviert oder deaktiviert ist.

10. Laseranordnung nach einem der Ansprüche 1 bis 9, **dadurch gekennzeichnet, dass** eine Absaugung (19) vorgesehen ist, deren Absaugleitung (20) in jenen Bereich ragt, in dem der Laserstrahl (6) austritt oder an dem der Laserstrahl (6) auf das zu reinigende Objekt trifft.

11. Laseranordnung nach einem der Ansprüche 1 bis 10, **dadurch gekennzeichnet, dass** eine Bewegungsvorrichtung (20) zur translatorischen Bewegung des Trägerelements (14) oder der Umlenkoptik (9) vorgesehen ist,
wobei die Richtung (21) der translatorischen Bewegung insbesondere der mittleren Ausgaberichtung des Laserstrahls (6) aus der Laserquelle (5), dem Verlauf des Trägerelements (14) oder der Drehachse (12) folgt,
und wobei gegebenenfalls eine zweite Richtung (21) der translatorischen Bewegung vorgesehen ist, die im Wesentlichen quer zur ersten Richtung und insbesondere vertikal verläuft.

12. Laseranordnung nach einem der Ansprüche 1 bis 11, **dadurch gekennzeichnet, dass** die Laseranordnung als ein mit einer Backmaschine (4) verbindbares oder verbundenes Modul ausgebildet ist.

13. Anordnung umfassend eine Backvorrichtung mit einem Endlosförderer (22),
- wobei an dem Endlosförderer (22) Backzangen (23) angeordnet sind,
- wobei die Backzangen (23) jeweils eine Unterplatte (25) und eine schwenkbar mit der Unterplatte (25) verbundene Oberplatte (24) umfassen,
- wobei die Backzangen (23) entlang des Endlosförderers (22) jeweils nacheinander:
- von einer Beschickungsvorrichtung (26) zum Auftrag einer Backmasse in eine geöffnete Backzange (23),
- zu einer Vorrichtung (27) zum Schließen der Backzange (23),
- durch einen beheizten Backraum (28),
- weiter zu einer Vorrichtung (29) zum Öffnen der Backzange (23),
- und dann zu einer Produktentnahmevorrichtung (31) zur Entnahme der gebackenen Produkte aus der Backzange (23) befördert werden,
**dadurch gekennzeichnet, dass** eine Laseranordnung nach einem der vorangegangenen Ansprüche vorgesehen ist.

14. Anordnung nach Anspruch 13, **dadurch gekennzeichnet, dass** eine Vorrichtung (29) zum Öffnen der Backzange (23) und eine Vorrichtung (27) zum Schließen der Backzange (23) vorgesehen sind, und dass die Backzangen (23) zwischen den beiden Vorrichtung (27, 29) um eine Öffnungswinkel geöffnet sind,
und dass die Umlenkoptik (9) und zumindest ein Teil des Trägerelements (14) seitlich, also quer zur Bewegungsrichtung des Endlosförderers (22) in die Backzange (23) und zwischen die Oberplatte (24) und die Unterplatte (25) ragt.

15. Anordnung nach Anspruch 13 oder 14, **dadurch gekennzeichnet, dass** die Projektionsrichtung (10) durch Drehung der Umlenkoptik (9) oder durch Drehung des mit der Umlenkoptik (9) verbundenen Trägerelements (14) wahlweise auf die von innen auf die Oberplatte (24) oder von innen auf die Unterplatte (25) gerichtet ist.

16. Anordnung nach einem der Ansprüche 13 bis 15, **dadurch gekennzeichnet, dass** der Einfallswinkel (30) der Projektionsrichtung (10) auf die Backzange (23) durch wahlweises Richten des Zielbereichs (7) der Laserquelle (5) auf eines der Umlenkelemente (11) oder auf eines der Reflektionselemente veränderbar ist.

17. Anordnung nach einem der Ansprüche 13 bis 16, **dadurch gekennzeichnet,**
- **dass** die Umlenkoptik (9) mindestens zwei Umlenkelemente (11) aufweist,
- **dass** der Zielbereich (7) der Laserquelle (5) wahlweise auf eines der beiden Umlenkelemente (11) gerichtet ist,
- **dass**, wenn der Zielbereich (7) der Laserquelle (5) auf das eine Umlenkelement (11) gerichtet ist, die Projektionsrichtung (10) einen ersten Einfallswinkel (30) auf die zu reinigende Backplatte (3) aufweist,
- **dass**, wenn der Zielbereich (7) der Laserquelle (5) auf das andere Umlenkelement (11) gerichtet ist, die Projektionsrichtung (10) einen zweiten Einfallswinkel (30) auf die zu reinigende Backplatte (3) aufweist,
- und **dass** die beiden Einfallswinkel (30) in entgegengesetzten Richtungen von einem lotrecht auf die Backplatte fallenden Einfallswinkel abweichen.

18. Anordnung nach einem der Ansprüche 13 bis 16, **dadurch gekennzeichnet,**
- **dass** die Umlenkoptik (9) mindestens drei Reflektionselemente aufweist,
- **dass** der Zielbereich (7) der Laserquelle (5) wahlweise auf eines der drei Reflektionselemente gerichtet ist,
- **dass**, wenn der Zielbereich (7) der Laserquelle (5) auf das eine Reflektionselement gerichtet ist, die Projektionsrichtung (10) einen ersten Einfallswinkel (30) auf die zu Reinigende Backplatte (3) aufweist,
- **dass**, wenn der Zielbereich (7) der Laserquelle (5) auf ein weiteres Reflektionselement gerichtet ist, die Projektionsrichtung (10) einen zweiten Einfallswinkel (30) auf die zu reinigende Backplatte (3) aufweist,
- **dass** die beiden Einfallswinkel (30) in gegengesetzten Richtungen von einem lotrecht auf die Backplatte (3) fallenden Einfallswinkel abweichen,
- und **dass**, wenn der Zielbereich (7) der Laserquelle (5) auf ein drittes Reflektionselement gerichtet ist, die Projektionsrichtung (10) einen dritten Einfallswinkel (30) auf die zu reinigende Backplatte (3) aufweist, der zwischen dem ersten und dem zweiten Einfallswinkel (30) liegt, und insbesondere im Wesentlichen lotrecht zur zu reinigende Backplatte (3) verläuft.
